# EUROPEAN PATENT SPECIFICATION

(11) **EP 2 783 141 B1**
(45) Date of publication and mention of the grant of the patent: **11.10.2017**
(21) Application number: 12810399.1
(22) Date of filing: 23.11.2012
(51) Int. Cl.: F16J 15/34, F16J 15/36

(54) **COMPONENT SEAL**
KOMPONENTENDICHTUNG
JOINT DE COMPOSANT

(30) Priority: 23.11.2011 GB 201120213
(43) Date of publication of application: 01.10.2014
(73) Proprietor: AES Engineering Ltd, Rotherham S60 1BZ (GB); Keown, James, Sheffield S11 8UL (GB)
(72) Inventor: KEOWN, James, Sheffield S11 8UL (GB)
(74) Representative: Harrison, Michael Robert
(86) International application number: PCT/GB2012/000856
(87) International publication number: WO 2013/076445

(56) References cited:
- WO-A1-2007/135402
- DE-A1- 1 902 396
- US-A- 3 499 388
- US-A- 5 725 219

## Description

### Field of Invention

The invention relates to mechanical seals, which are fitted to rotating equipment in virtually all types of industries.

### Background to Invention

A mechanical seal comprises a "floating" component which is mounted axially movable around the rotary shaft of, for example, a pump or a "static" component which is axially fixed, typically being secured to a housing. The floating component has a flat annular end face, i.e. its seal face, directed towards a seal face of the static component. The floating component is urged towards the static component to close the seal faces together to form a sliding face seal, usually by means of one or more spring members. In use, one of the floating and static components rotates; this component is therefore referred to as the rotary component. The other of the floating and static components does not rotate and is referred to as the stationary component.

Those seals whose floating component is rotary are described as rotary seals. If the floating component is stationary, the seal is referred to as a stationary seal.

If the sliding seal between the rotary and stationary components are assembled and pre-set prior to despatch from the Mechanical seal manufacturing premises, the industry terminology for this is "cartridge seal". If the rotary and stationary components are despatched individually (unassembled) from the Mechanical seal manufacturing premises, the industry terminology for this is "component seal".

This invention relates to component seals which are used in numerous industries to seal a variety of different process media and operating conditions. The sale of these seals is price sensitive due to the relatively simple and common technology used. For this reason modularity in the design is a key way of reducing the associated costs of manufacturing and stocking of parts. For this reason it is essential that as many parts can be used for as many seals as possible.

Pressed and formed components are one way in which mechanical seal manufacturers can reduce the manufacturing cost of said components. Unfortunately due to the typically relatively thin sheet metal material from which these pressed and formed components are manufactured, technical aspects of a single or a combination of components working relative to each other can be compromised.

One such example of this is the drive mechanism demonstrated in Gilbert US 5,725,219, which constitutes the closest prior art according to the preamble of claim 1, whereby two pressed and substantially thin components engage each other via intermeshing castellations. Said castellations comprise an open longitudinal end in each member and when engaged with each other are intended to transmit the rotational drive between two longitudinally spaced points within said seal assembly.

In practice this design suffers from several drawbacks, namely;
▪ The torsional forces acting on the interface between the two component which are mounted in a radially resilient member and subjected to equipment vibration, can become radially misaligned thereby allowing them to rotationally twist inside each other, thereby negating any substantial rotational drive benefit between the two members.
▪ In the seal's free state, the open ended castellations of each member can disengage creating an installation issue. Furthermore, a spring member, positioned between two longitudinally floating members provides a longitudinal force which is applied directly to a flexible longitudinal sealing member, leading to stretching and/or tearing of said member.

Roddis WO2007/135402 overcomes these issues by having one of the pressed components diametrically larger than the other therefore allowing the two components to be axially located within one another. The drive between the two members is provided by numerous radially protruding male members which engage into a female portion in the second component.

The drawback of this design is that due to it relying on one component being diametrically larger than other, manufacturing and stocking costs are increased due to the requirement for two sets of press tooling to manufacture the components and also the need to keep two components in stock.

It is therefore advantageous for a seal of this type to incorporate a drive mechanism between two pressed components which axially restricts movement of these components. The two components should have restricted radial movement to ensure that radial misalignment of the drive mechanism is not possible. One of the components should be capable of being reversed and interlocked with the other to provide the drive mechanism whilst halving the number of different pressed components and so halving the number of press tools required.

### Statements of Invention

The invention relates to a mechanical seal for providing a fluid-tight seal between relatively rotatable elements, the seal preferably comprising a mechanical seal comprising an elastomeric member (2), a spring biasing means (7), a longitudinally non-floating first member (4), a longitudinally floating second member (5) and a longitudinally floating seal face (6); said elastomeric member being in sealing engagement with said seal face and said first and second members, and said spring biasing means being longitudinally positioned between said seal face and said second member, one of said first member and second members being provided with at least one longitudinally protruding male portion (12) and the other of said first and second and members being provided with corresponding a female portion (13) into which said male portion is engageable so as to restrict the relative longitudinal movement between said members, characterised in that the male and female portions are both of T-profile whereby the engagement between a male portion and its corresponding female portion is positive whereby the seal remains assembled in its free state.

Preferably of said first and second members (4,5) is provided with at least one male portion and at least one female portion.

Preferably a seal wherein said first and second members (4, 5) are identical.

More preferably, said male and female portions are located at 12 and 6 o'clock positions with respect to one another.

More preferably, said female portion resides in a longitudinally protruding portion of semi circular nature.

Preferably, said edges of said longitudinally protruding portions of said first member contact with said edges of said longitudinally protruding portions of said second member. Preferably, said spring member restricts said radial movement of said first and second members.

More preferably said spring member has an internal diameter that is equal to said protruding members of said first and second members.

### Brief Description of Drawings

The accompanying drawings are as follows:
Figure 1 is a sectional side elevation of a mechanical seal in accordance with a first embodiment of the present invention;
Figure 2 is an isometric view of the seal of Figure 1 whilst in its free state;
Figure 3 is an isometric view of the first and second pressed components of the seal of Figure 1;
Figure 4 is an isometric view of the assembled first and second members of the seal of Figure 1; and
Figure 5 is a sectional side elevation of a mechanical seal in accordance with a second embodiment of the present invention.

### Detailed Description

The invention will now be described, by way of examples only, with reference to the accompanying drawings.

The general principle of mechanical seals in accordance with the present invention may be used not only in the case where the shaft is a rotary member and the housing is the stationary member but also the reverse situation, that is to say, in which the shaft is stationary and the housing is rotary.

Furthermore, the invention may be embodied in both rotary and stationary arrangements, cartridge and component seals with metallic components as well as non-metallic components.

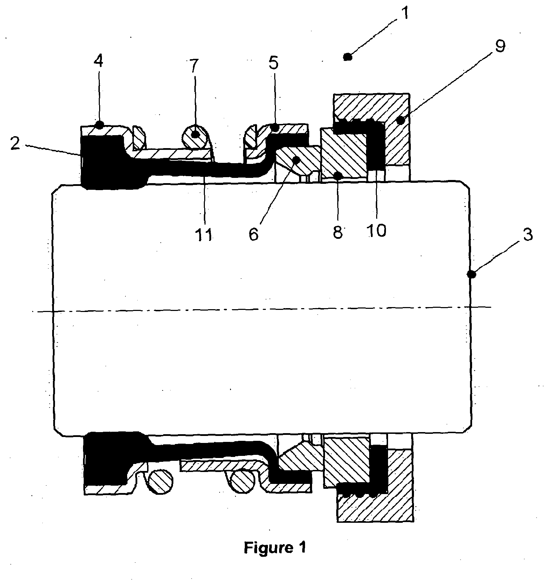

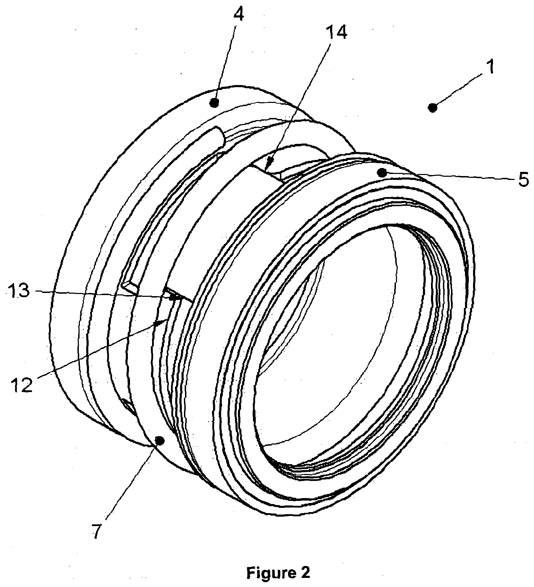

Referring to Figure 1 of the accompanying drawings, a seal 1 incorporates an elastomeric bellows member 2 which is radially disposed between shaft 3 and first longitudinally non-floating and second, longitudinally floating members, 4 and 5 respectively. Said first member 4 squeezes said elastomeric bellows member 2 providing a seal between said elastomeric bellows member 2, said first member 4 and said shaft member 3. A first sealing face 6 is radially and axially restrained through squeeze created between said elastomeric bellows member 2 and said second member 5. A spring member 7 is longitudinally disposed between said first and second members 4 & 5 thus axially urging said first sealing face 6 towards a second sealing face 8. Said second sealing face 8 is located in a housing 9 with a second elastomeric sealing member 10 residing between said second sealing face 8 and said housing 9. Said middle section 11 of said elastomeric bellows member 2 is proportioned such that contact is maintained between said middle section 11, said shaft 3 and said first and second members 4 & 5. Said spring member 7 is proportioned such that said inner diameter is in close proximity with first and second members 4 & 5 so that radial misalignment of said first and second members 4 & 5 is not possible in operation and in said seal 1 freestate, (see Figure 2). The profile of said first sealing face 6 is such that the clearance between its inner diameter and said shaft 3 is a small as possible.

Referring to Figure 2 of the accompanying drawings, seal 1 is shown in its free state. Said first and second members 4 & 5 interlock with one another preferably via a T-profile protrusion 12 which interlocks with a T-profile window 13 which restricts axial movement of said members ensuring that seal 1 remains assembled in free state. Axial drive between said first and second members 4 & 5 is provided through abutting edges 14 between said first and second members 4 & 5.

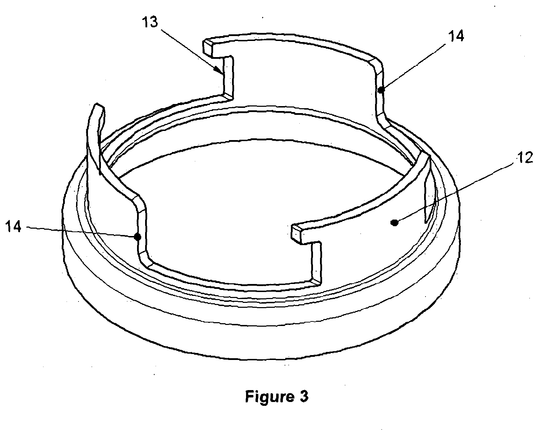

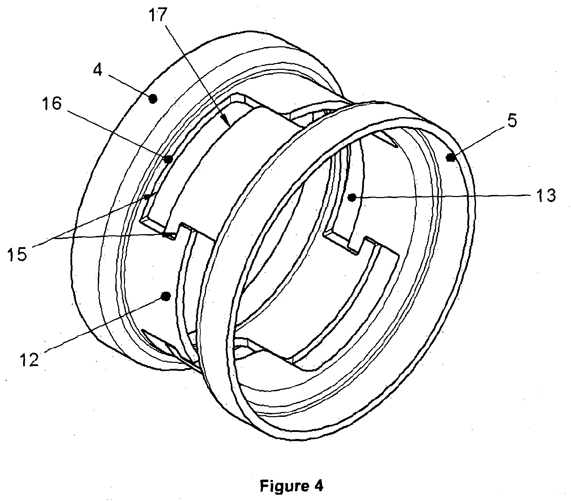

For reasons of reducing manufacturing and stocking costs, it is preferable in said invention 1 for said first and second members 4 & 5 to be the same component. Referring to Figure 3 of the accompanying drawings, said T-profile protrusion 12 is radially disposed 180 degrees from said T-profile window 13. Said abutting edges 14 preferably reside at the mid axis point of said first member 4 allowing said same component to be reversed and interlocked with said second member 5, as shown Figure 4 of the accompanying drawings. Referring to Figure 3 the three male protrusions are of equal size as each other and equally spaced so that the material weight is balanced during rotation.

Referring to Figure 4 of the accompanying drawings, gaps are present, when the seal is installed on shaft, at either end of said T-profile protrusion 12 and said T-profile window 13 allowing a set amount of axial movement of said members 4 & 5 prior to engagement of said protrusion 12 and window 13. A gap is also present between said inner 16 and outer 17 portions of said first and second members 4 & 5 allowing a set amount of axial movement of said members 4 & 5.

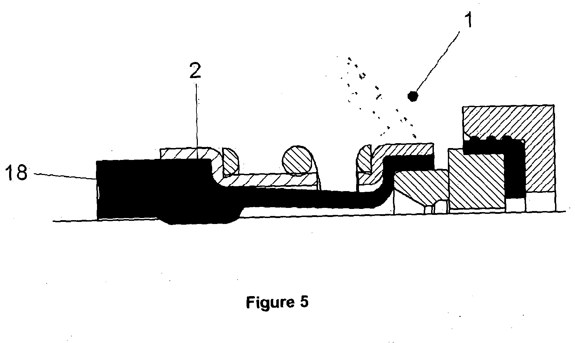

Figure 5 shows an alternative embodiment of the invention wherein said elastomeric bellows member 2 has an axially extended section 18 allowing the same seal to be used in an alternative application whilst only requiring a second alternative bellows component.

## Claims

1. A mechanical seal comprising an elastomeric member (2), a spring biasing means (7), a longitudinally non-floating first member (4), a longitudinally floating second member (5) and a longitudinally floating seal face (6); said elastomeric member being in sealing engagement with said seal face and said first and second members, and said spring biasing means being longitudinally positioned between said seal face and said second member, one of said first member and second members being provided with at least one longitudinally protruding male portion (12) and the other of said first and second and members being provided with corresponding a female portion (13) into which said male portion is engageable so as to restrict the relative longitudinal movement between said members, **characterised in that** the male and female portions are both of T-profile whereby the engagement between a male portion and its corresponding female portion is positive whereby the seal remains assembled in its free state.

2. A seal according to Claim 1, wherein each of said first and second members (4,5) is provided with at least one male portion and at least one female portion.

3. A seal according to Claim 2, wherein said first and second members (4, 5) are identical.

4. A seal according to any of the preceding claims wherein said male and female portions (12, 130 on each of said first and second member (4, 5) are location at 12 and 6 o'clock positions with respect to one another.

5. A seal according to any of the preceding claims, wherein said female portion (13) is accommodated in a longitudinally protruding, semi-circular portion.

6. A seal according to Claim 5, wherein the semi-circular protruding portion of one member has edges (14) which are in contact with corresponding edges of the semi-circular protruding portion of the other member.

7. A seal according to any of the preceding claims, wherein said spring biasing means restricts the radial movement of said first and second members.

8. A seal according to any of the preceding claims, wherein said spring biasing means has an internal diameter that is equal to those of the protruding portions of said first and second members.

## Patentansprüche

1. Gleitringdichtung, umfassend ein elastomeres Element (2), ein Federvorspannmittel (7), ein in Längsrichtung nichtschwimmendes erstes Element (4), ein in Längsrichtung schwimmendes zweites Element (5) und eine in Längsrichtung schwimmende Dichtungsfläche (6); wobei das elastomere Element sich im Dichtungseingriff mit der Dichtungsfläche und dem ersten und dem zweiten Element befindet und das Federvorspannmittel in Längsrichtung zwischen der Dichtungsfläche und dem zweiten Element angeordnet ist, wobei ein Element der ersten und zweiten Elemente wenigstens einen in Längsrichtung vorstehenden Steckabschnitt (12) aufweist und das andere Element der ersten und zweiten Elemente einen damit korrespondierenden Aufnahmeabschnitt (13) aufweist, in den der Steckabschnitt so in Eingriff bringbar ist, dass die relative Längsbewegung zwischen den Elementen begrenzt ist, **dadurch gekennzeichnet, dass** der Steck- und der Aufnahmeabschnitt beide ein T-Profil aufweisen, wodurch der Eingriff zwischen einem Steckabschnitt und seinem damit korrespondierenden Aufnahmeabschnitt formschlüssig ist, wodurch die Dichtung in ihrem freien Zustand zusammengefügt bleibt.

2. Dichtung nach Anspruch 1, wobei sowohl das erste als auch das zweite Element (4, 5) wenigstens einen Steckabschnitt und wenigstens einen Aufnahmeabschnitt aufweisen.

3. Dichtung nach Anspruch 2, wobei das erste und das zweite Element (4, 5) identisch sind.

4. Dichtung nach einem der vorhergehenden Ansprüche, wobei der Steck- und der Aufnahmeabschnitt (12, 13) auf sowohl dem ersten als auch dem zweiten Element (4, 5) in Bezug aufeinander an der 12-Uhr- und der 6-Uhr-Position angeordnet sind.

5. Dichtung nach einem der vorhergehenden Ansprüche, wobei der Aufnahmeabschnitt (13) in einem in Längsrichtung vorstehenden halbkreisförmigen Abschnitt aufgenommen wird.

6. Dichtung nach Anspruch 5, wobei der halbkreisförmige vorstehende Abschnitt eines Elements Ränder (14) aufweist, die sich in Kontakt mit korrespondierenden Rändern des halbkreisförmigen vorstehenden Abschnitts des anderen Elements befinden.

7. Dichtung nach einem der vorhergehenden Ansprüche, wobei das Federvorspannmittel die radiale Bewegung des ersten und des zweiten Elements begrenzt.

8. Dichtung nach einem der vorhergehenden Ansprüche, wobei das Federvorspannmittel einen Innendurchmesser aufweist, der denjenigen der vorstehenden Abschnitte des ersten und des zweiten Elements gleicht.

## Revendications

1. Joint d'étanchéité mécanique comprenant un élément élastomérique (2), un moyen de rappel par ressort (7), un premier élément non flottant longitudinalement (4), un second élément flottant longitudinalement (5) et une face d'étanchéité flottant longitudinalement (6) ; ledit élément élastomérique se trouvant en interaction d'étanchéité avec ladite face d'étanchéité et lesdits premier et second éléments, et ledit moyen de sollicitation par ressort étant positionné longitudinalement entre ladite face d'étanchéité et ledit second élément, l'un desdits premier et second éléments étant pourvu d'au moins une partie mâle faisant saillie longitudinalement (12) et l'autre desdits premier et second éléments étant pourvu d'une partie femelle (13) correspondante dans laquelle ladite partie mâle peut être engagée de façon à limiter le déplacement relatif longitudinal entre lesdits éléments, **caractérisé en ce que** les parties mâle et femelle présentent toutes deux un profil en T, l'accouplement entre une partie mâle et sa partie femelle correspondante se faisant ainsi par complémentarité de forme, le joint d'étanchéité restant ainsi assemblé dans son état libre.

2. Joint d'étanchéité selon la revendication 1, dans lequel chacun desdits premier et second éléments (4, 5) est pourvu d'au moins une partie mâle et d'au moins une partie femelle.

3. Joint d'étanchéité selon la revendication 2, dans lequel lesdits premier et second éléments (4, 5) sont identiques.

4. Joint d'étanchéité selon l'une quelconque des revendications précédentes, dans lequel lesdites parties mâle et femelle (12, 130) sur chacun desdits premier et second éléments (4, 5) sont déposées en des positions correspondant à 12h et 6h l'une par rapport à l'autre.

5. Joint d'étanchéité selon l'une quelconque des revendications précédentes, dans lequel ladite partie femelle (13) se trouve dans une partie semi-circulaire faisant saillie longitudinalement.

6. Joint d'étanchéité selon la revendication 5, dans lequel la partie semi-circulaire saillante d'un élément comporte des bords (14) qui sont en contact avec des bords correspondants de la partie semi-circulaire saillante de l'autre élément.

7. Joint d'étanchéité selon l'une quelconque des revendications précédentes, dans lequel ledit moyen de rappel par ressort limite le déplacement radial desdits premier et second éléments.

8. Joint d'étanchéité selon l'une quelconque des revendications précédentes, dans lequel ledit moyen de rappel par ressort présente un diamètre intérieur qui est égal à ceux des parties saillantes desdits premier et second éléments.
